# FASCICULE DE BREVET EUROPEEN

(11) **EP 3 257 410 B1**
(45) Date de publication et mention de la délivrance du brevet: **20.03.2019**
(21) Numéro de dépôt: 17175552.3
(22) Date de dépôt: 12.06.2017
(51) Int. Cl.: A47J 37/06, F24C 15/32

(54) **APPAREIL DE CUISSON A FLUX D'AIR**
KOCHGERÄT MIT LUFTSTROM
AIR-FLOW COOKING APPLIANCE

(30) Priorité: 15.06.2016 FR 1655557
(43) Date de publication de la demande: 20.12.2017
(73) Titulaire: SEB S.A., 69130 Ecully (FR)
(72) Inventeur: MUHR, Nicolas, 21000 DIJON (FR); QUINARD, Jérémy, 21000 DIJON (FR)
(74) Mandataire: Bourrières, Patrice

(56) Documents cités:
- WO-A1-2012/032449
- WO-A1-2015/081549
- US-A- 5 801 362

## Description

La présente invention concerne de manière générale un appareil de cuisson domestique, et en particulier un appareil de cuisson portable ou transportable à flux d'air.

Il est connu dans l'art antérieur des appareils de cuisson par convection ou à flux d'air, tel que celui présenté dans le document WO 2012032449 A1. En contrepartie, cet appareil présente notamment l'inconvénient de proposer une structure interne complexe, sans pour autant pouvoir évacuer efficacement de la vapeur d'eau générée lors de la cuisson des aliments.

Un but de la présente invention est de répondre aux inconvénients de l'art antérieur mentionnés ci-dessus et en particulier, tout d'abord, de proposer un appareil de cuisson à flux d'air présentant une structure interne simple et qui permette d'évacuer efficacement de la vapeur d'eau présente dans un espace de cuisson de cet appareil.

Pour cela un premier aspect de l'invention concerne un appareil de cuisson d'aliment comprenant :
- une turbine centrifuge agencée pour créer un flux d'air dans un espace de cuisson,
- une fenêtre d'extraction de vapeur agencée pour extraire vers l'extérieur de l'appareil de la vapeur présente dans l'espace de cuisson,
caractérisé en ce que la fenêtre d'extraction présente en tout point de sa surface de passage une direction normale avec au moins une composante non nulle selon une direction tangentielle à un cercle centré sur la turbine centrifuge et passant au centre de la fenêtre d'extraction.

L'appareil de cuisson selon la présente mise en oeuvre comprend une fenêtre d'extraction formant une extrémité amont d'un conduit vers l'extérieur de l'appareil, pour permettre à de la vapeur d'eau de s'échapper de l'espace de cuisson. L'orientation de la fenêtre d'extraction est choisie pour que le flux d'air qui a une composante tangentielle en sortie de la turbine centrifuge vienne frapper la fenêtre d'extraction. En d'autres termes, la fenêtre d'extraction n'est pas parallèle à une tangente d'un cercle centré sur la turbine centrifuge et passant par le centre de la fenêtre d'extraction, ce qui évite de devoir implanter dans l'espace de cuisson un déflecteur orienté vers la fenêtre d'extraction par exemple.

On entend par le centre de la fenêtre d'extraction la zone médiane ou milieu ou équidistante des bords de la fenêtre d'extraction, dans un plan de projection perpendiculaire à l'axe de rotation de la turbine centrifuge.

Avantageusement, la fenêtre d'extraction est agencée en regard d'une zone d'échappement de la turbine centrifuge.

Avantageusement, la fenêtre d'extraction présente en tout point de sa surface de passage une direction normale orientée d'un angle compris dans une plage allant de 110° à 125°, et plus préférentiellement de 110° à 118°, par rapport à la direction tangentielle au cercle centré sur la turbine centrifuge et passant au centre de la fenêtre d'extraction. Le demandeur a déterminé que cette orientation permet une extraction optimale de la vapeur d'eau.

Avantageusement, l'appareil de cuisson comprend un conduit d'extraction de vapeur agencé entre la fenêtre d'extraction et l'extérieur de l'appareil de cuisson et présentant une direction longitudinale, et la fenêtre d'extraction présente en tout point de sa surface de passage une direction normale orientée par rapport à la direction longitudinale du conduit d'extraction de vapeur d'un angle compris dans une plage allant de 20° à 35°, et plus préférentiellement de 20° à 28°.

En d'autres termes, l'invention concerne aussi un appareil de cuisson d'aliment comprenant :
- une turbine centrifuge agencée pour créer un flux d'air dans un espace de cuisson,
- une fenêtre d'extraction de vapeur agencée pour extraire vers l'extérieur de l'appareil de la vapeur présente dans l'espace de cuisson,
- un conduit d'extraction de vapeur agencé entre la fenêtre d'extraction et l'extérieur de l'appareil de cuisson et présentant une direction longitudinale,
caractérisé en ce que la fenêtre d'extraction présente en tout point de sa surface de passage une direction normale orientée par rapport à la direction longitudinale du conduit d'extraction de vapeur d'un angle compris dans une plage allant de 20° à 35°, et plus préférentiellement de 20° à 28°.

Avantageusement, la fenêtre d'extraction et/ou le conduit d'extraction sont directement formés par une cloison délimitant l'espace de cuisson. Cette mise en oeuvre permet de limiter les pièces supplémentaires et assemblages liés.

Avantageusement, l'espace de cuisson comprend une partie supérieure de l'espace de cuisson formée par une cloison supérieure comprenant au moins une face plane et parallèle à un axe de rotation de la turbine centrifuge, sur laquelle est agencée la fenêtre d'extraction, et la fenêtre d'extraction est orientée par rapport à la face plane d'un angle compris dans une plage allant de 20° à 35°, et plus préférentiellement de 20° à 28°.

En d'autres termes, l'invention concerne aussi un appareil de cuisson d'aliment comprenant :
- une turbine centrifuge agencée pour créer un flux d'air dans un espace de cuisson,
- une fenêtre d'extraction de vapeur agencée pour extraire vers l'extérieur de l'appareil de la vapeur présente dans l'espace de cuisson,
- une partie supérieure de l'espace de cuisson formée par une cloison supérieure comprenant au moins une face plane et parallèle à un axe de rotation de la turbine centrifuge, sur laquelle est agencée la fenêtre d'extraction,
caractérisé en ce que la fenêtre d'extraction est orientée par rapport à la face plane d'un angle compris dans une plage allant de 20° à 35°, et plus préférentiellement de 20° à 28°.

Avantageusement, la fenêtre d'extraction est formée par une grille plane. Une telle fenêtre est simple à fabriquer.

Avantageusement, la turbine centrifuge comprend une pluralité de pales, et la fenêtre d'extraction présente au moins une portion agencée à une distance inférieure à 10mm et préférentiellement inférieure à 5mm d'une extrémité des pales. Cette mise en oeuvre permet d'augmenter l'efficacité d'extraction en imposant une proximité entre la fenêtre d'extraction et la turbine centrifuge.

Avantageusement, l'appareil de cuisson comprend un boîtier et un panier de cuisson amovible par rapport au boitier et agencé pour recevoir des aliments à cuire, dans lequel le panier de cuisson est mobile en translation par rapport au boîtier, selon une direction perpendiculaire à l'axe de rotation de la turbine centrifuge.

Avantageusement, l'appareil de cuisson comprend des moyens de chauffage, agencés entre le panier de cuisson et la turbine centrifuge.

Avantageusement, la fenêtre d'extraction est agencée sur un côté de l'appareil de cuisson opposé à un côté où le panier de cuisson peut être saisi par un utilisateur. La fenêtre d'extraction est donc à l'opposé de la zone où évolue l'utilisateur, ce qui améliore la sécurité, et cela évite aussi d'avoir de la condensation sur les parois visibles par l'utilisateur.

Avantageusement, le panier de cuisson est monté en liaison glissière par rapport au boîtier.

Avantageusement, l'appareil de cuisson comprend des moyens d'étanchéité agencés entre une porte solidaire du panier de cuisson et le boîtier de l'appareil.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe d'un appareil de cuisson selon l'invention avec un espace de cuisson comprenant une turbine centrifuge et une fenêtre d'extraction de vapeur ;
- la figure 2 représente une vue en perspective d'une face arrière de l'appareil de la figure 1 ;
- la figure 3 représente une vue de dessous d'une partie supérieure de l'espace de cuisson de l'appareil de la figure 1.

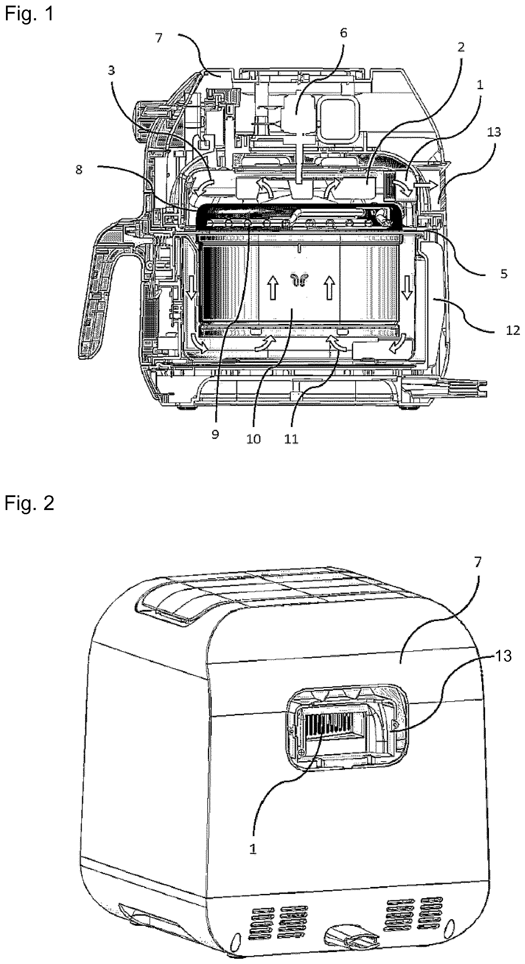

La figure 1 représente une vue en coupe d'un appareil de cuisson à flux d'air, qui comprend une turbine centrifuge 2, agencée dans un espace de cuisson formé par une cavité supérieure 3 et une cuve 11. La cuve 11 ainsi qu'un panier de cuisson 10 sont amovibles par rapport à un boîtier 7. Ces éléments sont guidés en translation le long d'un guide formé par une enceinte de cuisson 12 et une bague 5. L'ensemble s'extrait par l'avant de l'appareil (à gauche de la figure 1), à l'aide d'une poignée de préhension, visible figure 1.

La cuisson des aliments se fait dans le panier de cuisson 10. L'air de l'espace de cuisson est chauffé au moyen d'une résistance 9 puis mis en mouvement dans cet espace de cuisson par la turbine centrifuge 2 connectée à cet effet à un moteur 6. L'air est aspiré par le panier de cuisson 10 via un déflecteur 8. Il se réchauffe au passage de la résistance 9. L'air est ensuite propulsé radialement sur les parois de la cavité supérieure 3 par la turbine centrifuge 2. L'air chauffé descend le long de la paroi de la cavité supérieure 3 et de la cuve 11 avant de fournir de la chaleur aux aliments dans le panier de cuisson 10. Des flèches sur la figure 1 schématisent le trajet du flux d'air.

Cependant, il est à noter qu'en raison du mouvement de rotation de la turbine centrifuge 2, le flux d'air en sortie de la turbine centrifuge 2 et descendant le long de la paroi de l'enceinte de cuisson 12 est également tournant, c'est-à-dire qu'il suit un mouvement en hélice ou cyclonique.

Afin d'éviter les surpressions dues à une apparition de vapeur d'eau au cours de la cuisson (de l'eau s'évapore des aliments à cuire), il est prévu une fenêtre d'extraction 1 au niveau de la cavité supérieure 3, en regard d'une zone d'échappement de la turbine centrifuge 2. La vapeur formée lors de la cuisson des aliments s'échappe par la fenêtre d'extraction 1 puis par un conduit d'extraction 13 en partie arrière supérieure de l'enceinte de cuisson, visible figure 2. Ainsi la vapeur peut s'échapper par l'arrière, à l'opposé de la poignée de préhension et de la face avant, ce qui évite toute interférence avec l'utilisateur et toute condensation sur la face avant.

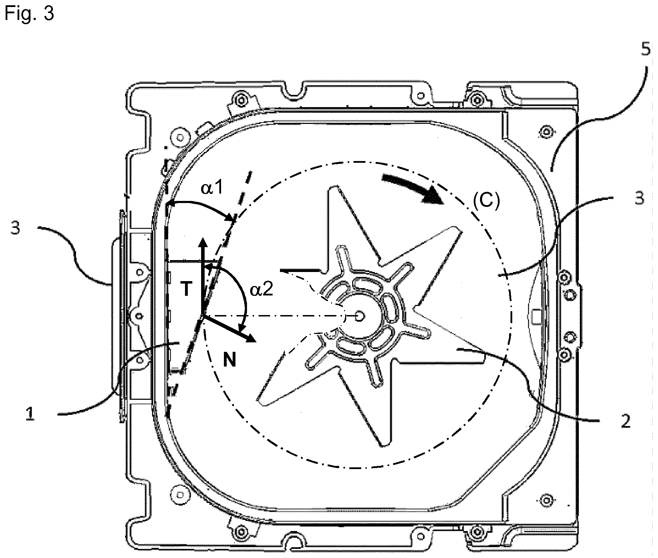

Afin de guider au mieux l'air humide vers le conduit d'extraction 13, l'invention propose un agencement particulier de la fenêtre d'extraction 1 dans la cavité supérieure 3, comme on peut le voir sur la figure 3.

La fenêtre d'extraction 1 est assemblée sur la cavité supérieure 3 en face de l'échappement de la turbine centrifuge 2 (dont une partie des pales a été masquée pour des raisons de clarté). La grille d'évent formant la fenêtre d'extraction 1 est orientée de façon judicieuse afin de capter un maximum du flux en sortie de la turbine centrifuge 2 qui a une composante radiale, mais également une composante tangentielle T.

La demanderesse a défini un angle α1 minimum de 20° et maximum de 35° entre la fenêtre d'extraction 1 et la face arrière plane de la cavité supérieure 3. Idéalement, un angle α1 de 24°±4° sera préféré.

Alternativement, un angle α2 entre une direction normale N à la fenêtre d'extraction 1 et une direction tangentielle T d'un cercle (C) centré sur la turbine centrifuge 2 et passant par le centre de la fenêtre d'extraction 1 est compris entre 110° et 125°, et il est idéalement compris dans une plage de valeur allant de 110° à 118°.

Enfin, on constate figure 3 que la fenêtre d'extraction 1 est avancée dans la cavité supérieure 3 pour être au plus proche des pales de la turbine centrifuge 2, afin de capter le plus de vapeur d'eau possible. On peut prévoir une distance entre la fenêtre d'extraction 1 et les pales de la turbine centrifuge 2 inférieure à 10mm, et plus préférentiellement inférieure à 5mm.

En résumé, l'invention procure une extraction efficace de la vapeur d'eau créée en cours de cuisson grâce à l'orientation de la fenêtre d'extraction qui n'est pas parallèle à la direction tangentielle du cercle concentrique à la turbine centrifuge 2 et passant au milieu de la fenêtre d'extraction, ainsi que grâce à la proximité de la fenêtre d'extraction avec les pales de la turbine centrifuge 2, la fenêtre d'extraction 1 formant une extrémité amont d'un conduit vers l'extérieur de l'appareil.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de cuisson d'aliment comprenant :
- une turbine centrifuge (2) agencée pour créer un flux d'air dans un espace de cuisson,
- une fenêtre d'extraction (1) de vapeur agencée pour extraire vers l'extérieur de l'appareil de la vapeur présente dans l'espace de cuisson,
**caractérisé en ce que** la fenêtre d'extraction (1) présente en tout point de sa surface de passage une direction normale (N) avec au moins une composante non nulle selon une direction tangentielle (T) à un cercle (C) centré sur la turbine centrifuge (2) et passant au centre de la fenêtre d'extraction (1).

2. Appareil de cuisson selon la revendication précédente, dans lequel la fenêtre d'extraction (1) présente en tout point de sa surface de passage une direction normale (N) orientée d'un angle (α2) compris dans une plage allant de 110° à 125°, et plus préférentiellement de 110° à 118°, par rapport à la direction tangentielle (T) au cercle (C) centré sur la turbine centrifuge (2) et passant au centre de la fenêtre d'extraction (1).

3. Appareil de cuisson selon l'une des revendications précédentes, comprenant un conduit d'extraction (13) de vapeur agencé entre la fenêtre d'extraction (1) et l'extérieur de l'appareil de cuisson et présentant une direction longitudinale, dans lequel la fenêtre d'extraction (1) présente en tout point de sa surface de passage une direction normale (N) orientée par rapport à la direction longitudinale du conduit d'extraction (13) de vapeur d'un angle compris dans une plage allant de 20° à 35°, et plus préférentiellement de 20° à 28°.

4. Appareil de cuisson selon la revendication précédente, dans lequel la fenêtre d'extraction (1) et/ou le conduit d'extraction (13) sont directement formés par une cloison délimitant l'espace de cuisson.

5. Appareil de cuisson selon l'une des revendications précédentes, dans lequel l'espace de cuisson comprend une partie supérieure de l'espace de cuisson formée par une cloison supérieure comprenant au moins une face plane et parallèle à un axe de rotation de la turbine centrifuge (2), sur laquelle est agencée la fenêtre d'extraction (1), et dans lequel la fenêtre d'extraction (1) est orientée par rapport à la face plane d'un angle (α1) compris dans une plage allant de 20° à 35°, et plus préférentiellement de 20° à 28°.

6. Appareil de cuisson selon l'une des revendications précédentes, dans lequel la fenêtre d'extraction (1) est formée par une grille plane.

7. Appareil de cuisson selon l'une des revendications précédentes, dans lequel la turbine centrifuge (2) comprend une pluralité de pales, et dans lequel la fenêtre d'extraction (1) présente au moins une portion agencée à une distance inférieure à 10mm et préférentiellement inférieure à 5mm d'une extrémité des pales.

8. Appareil de cuisson selon l'une des revendications précédentes, comprenant un boîtier (7) et un panier de cuisson (10) amovible par rapport au boitier et agencé pour recevoir des aliments à cuire, dans lequel le panier de cuisson (10) est mobile en translation par rapport au boîtier (7), selon une direction perpendiculaire à l'axe de rotation de la turbine centrifuge (2).

9. Appareil de cuisson selon la revendication précédente, comprenant des moyens de chauffage, agencés entre le panier de cuisson (10) et la turbine centrifuge (2).

10. Appareil de cuisson selon l'une des revendications 8 ou 9, dans lequel le panier de cuisson (10) est monté en liaison glissière par rapport au boîtier (7).

11. Appareil de cuisson selon l'une des revendications 8 à 10, dans lequel la fenêtre d'extraction (1) est agencée sur un côté de l'appareil de cuisson opposé à un côté où le panier de cuisson (10) peut être saisi par un utilisateur.

12. Appareil de cuisson selon l'une des revendications 8 à 11, comprenant des moyens d'étanchéité agencés entre une porte solidaire du panier de cuisson (10) et le boîtier de l'appareil.

## Patentansprüche

1. Kochgerät für Nahrungsmittel, umfassend:
- eine Zentrifugalturbine (2), die angeordnet ist, um einen Luftstrom in einem Kochraum zu erzeugen,
- ein Extraktionsfenster (1) für Dampf, das so angeordnet ist, dass es Dampf, der in dem Kochraum vorhanden ist, zu dem Äußeren von dem Gerät extrahiert,
**dadurch gekennzeichnet, dass** das Extraktionsfenster (1) an allen Punkten seiner Durchgangsfläche eine Normalrichtung (N) mit mindestens einer von Null verschiedenen Komponente in tangentialer Richtung (T) an einem Kreis (C) aufweist, der auf der Zentrifugalturbine (2) zentriert ist und durch die Mitte des Extraktionsfensters (1) verläuft.

2. Kochgerät nach dem vorstehenden Anspruch, wobei das Extraktionsfenster (1) an jedem Punkt seiner Durchgangsfläche eine Normalrichtung (N) aufweist, die mit einem Winkel (α2) ausgerichtet ist, der in einem Bereich von 110° bis 125° und bevorzugter von 110° bis 118° relativ zu der tangentialen Richtung (T) an dem Kreis (C) liegt, der auf der Zentrifugalturbine (2) zentriert ist und durch die Mitte des Extraktionsfensters (1) verläuft.

3. Kochgerät nach einem der vorstehenden Ansprüche, das eine Extraktionsleitung (13) für Dampf umfasst, die zwischen dem Extraktionsfenster (1) und dem Äußeren des Kochgeräts angeordnet ist, und eine Längsrichtung aufweist, wobei das Extraktionsfenster (1) an allen Stellen seiner Durchtrittsfläche eine Normalrichtung (N) aufweist, die in Bezug auf die Längsrichtung der Extraktionsleitung (13) für Dampf mit einem Winkel ausgerichtet ist, der in einem Bereich von 20° bis 35° und bevorzugter von 20° bis 28° liegt.

4. Kochgerät nach dem vorstehenden Anspruch, wobei das Extraktionsfenster (1) und / oder die Extraktionsleitung (13) direkt durch eine den Kochraum begrenzende Trennwand gebildet sind.

5. Kochgerät nach einem der vorstehenden Ansprüche, wobei der Kochraum einen oberen Teil des Kochraums umfasst, der durch eine obere Trennwand gebildet ist, die mindestens eine ebene Fläche umfasst und parallel zu einer Rotationsachse der Zentrifugalturbine (2) ist, wobei auf diesem das Extraktionsfenster (1) angeordnet ist, und wobei das Extraktionsfenster (1) relativ zu der ebenen Fläche mit einem Winkel (α1) ausgerichtet ist, der in einem Bereich von 20° bis 35° und bevorzugter von 20° bis 28° liegt.

6. Kochgerät nach einem der vorstehenden Ansprüche, wobei das Extraktionsfenster (1) von einem ebenen Gitter gebildet ist.

7. Kochgerät nach einem der vorstehenden Ansprüche, wobei die Zentrifugalturbine (2) eine Vielzahl von Schaufeln aufweist, und wobei das Extraktionsfenster (1) mindestens einen Abschnitt aufweist, der in einem Abstand von weniger als 10 mm und vorzugsweise weniger als 5 mm von einem Ende der Schaufeln angeordnet ist.

8. Kochgerät nach einem der vorstehenden Ansprüche, umfassend ein Gehäuse (7) und einen von dem Gehäuse abnehmbaren und zur Aufnahme von zu kochendem Lebensmitteln angeordneten Kochkorb (10), wobei der Kochkorb (10) relativ zu dem Gehäuse (7) in einer Richtung senkrecht zur Drehachse der Zentrifugalturbine (2) translatorisch beweglich ist.

9. Kochgerät nach dem vorstehenden Anspruch, umfassend Heizmittel, die zwischen dem Kochkorb (10) und der Zentrifugalturbine (2) angeordnet sind.

10. Kochgerät nach einem der Ansprüche 8 oder 9, wobei der Kochkorb (10) relativ zu dem Gehäuse (7) in Gleitverbindung angebracht ist.

11. Kochgerät nach einem der Ansprüche 8 bis 10, wobei das Extraktionsfenster (1) auf einer Seite des Kochgeräts gegenüber einer Seite angeordnet ist, an der der Kochkorb (10) von einem Benutzer ergriffen werden kann.

12. Kochgerät nach einem der Ansprüche 8 bis 11, umfassend Dichtungsmittel, die zwischen einer mit dem Kochkorb (10) fest verbundenen Tür und dem Gehäuse des Geräts angeordnet sind.

## Claims

1. Food cooking appliance comprising:
- a centrifuge turbine (2) arranged to create a flow of air in a cooking space,
- a window for extracting (1) steam arranged to extract the steam present in the cooking space towards the outside of the appliance,
**characterised in that** the extraction window (1) has at any point of its passage surface a normal direction (N) with at least one non-zero component along a direction tangent (T) to a circle (C) centred on the centrifuge turbine (2) and passing through the centre of the extraction window (1).

2. Cooking appliance according to the preceding claim, wherein the extraction window (1) has at any point of its passage surface a normal direction (N) oriented by an angle (α2) within a range from 110° to 125°, and more preferably from 110° to 118°, with respect to the direction tangent (T) to the circle (C) centred on the centrifuge turbine (2) and passing through the centre of the extraction window (1).

3. Cooking appliance according to one of the preceding claims, comprising a steam extraction duct (13) arranged between the extraction window (1) and the outside of the cooking appliance and having a longitudinal direction, wherein the extraction window (1) has at any point of its passage surface a normal direction (N) oriented in relation to the longitudinal direction of the steam extraction duct (13) by an angle within a range from 20° to 35°, and more preferably from 20° to 28°.

4. Cooking appliance according to the preceding claim, wherein the extraction window (1) and/or the extraction duct (13) are directly formed by a partition delimiting the cooking space.

5. Cooking appliance according to one of the preceding claims, wherein the cooking space comprises an upper portion of the cooking space formed by an upper partition comprising at least one flat face and parallel to an axis of rotation of the centrifuge turbine (2), whereon is arranged the extraction window (1), and wherein the extraction window (1) is oriented in relation to the flat face by an angle (α1) within a range from 20° to 35°, and more preferably from 20° to 28°.

6. Cooking appliance according to one of the preceding claims, wherein the extraction window (1) is formed by a flat grid.

7. Cooking appliance according to one of the preceding claims, wherein the centrifuge turbine (2) comprises a plurality of blades, and wherein the extraction window (1) has at least one portion arranged at a distance less than 10mm and preferably less than 5mm from one end of the blades.

8. Cooking appliance according to one of the preceding claims, comprising a case (7) and a cooking basket (10) that can be removed with respect to the case and arranged to receive food to be cooked, wherein the cooking basket (10) is mobile in translation in relation to the case (7), according to a direction perpendicular to the axis of rotation of the centrifuge turbine (2).

9. Cooking appliance according to the preceding claim, comprising means for heating, arranged between the cooking basket (10) and the centrifuge turbine (2).

10. Cooking appliance according to one of claims 8 or 9, wherein the cooking basket (10) is mounted as a sliding connection in relation to the case (7).

11. Cooking appliance according to one of claims 8 to 10, wherein the extraction window (1) is arranged on a side of the cooking appliance opposite a side where the cooking basket (10) can be grasped by a user.

12. Cooking appliance according to one of claims 8 to 11, comprising means for sealing arranged between a door integral with the cooking basket (10) and the case of the appliance.
